Europäisches Patentamt

European Patent Office

Office européen des brevets

(19)

(11) EP 0 940 954 A1

(12) EUROPÄISCHE PATENTANMELDUNG

(43) Veröffentlichungstag:
08.09.1999 Patentblatt 1999/36

(51) Int. Cl.6: H04L 12/64

(21) Anmeldenummer: 99101993.6

(22) Anmeldetag: 01.02.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 04.03.1998 DE 19809071

(71) Anmelder:
DaimlerChrysler Aerospace Airbus Gesellschaft
mit beschränkter Haftung
21129 Hamburg (DE)

(72) Erfinder:
Kuhlmann, Holger, Dipl.-Ing.
21732 Krummendeich (DE)

(74) Vertreter:
Hansmann, Dierk, Dipl.-Ing.
Patentanwälte
Hansmann-Klickow-Hansmann
Jessenstrasse 4
22767 Hamburg (DE)

(54) Verfahren zur Übertragung von isochronen Daten

(57) Verfahren zur Übertragung von isochronen Daten mit fest definierten Zeitintervallen und mit geringen, je nach Dateninhalten variierbaren Toleranzgrenzen, insbesondere zur Übertragung von Video-Daten oder von Audio-Daten in der Kabine eines Flugzeuges.

Die Übertragung von isochronen Daten zu nicht fest definierten Zeitpunkten unter Beibehaltung des CAN-BUS-Standards wird dadurch ermöglicht,

- daß ein nicht-deterministisches Datenübertragungsverfahren zur seriellen Übertragung der isochronen Datenströme verwendet wird,
- daß die isochronen Datenströme zu Datenpaketen mit unterschiedlichen Prioritäten entsprechend der Wichtigkeit der Datenströme zusammengefaßt werden,
- daß die Datenpakete zur reihenmäßigen Festlegung mit Zeitmarken versehen werden,
- daß die Datenpakete übertragen werden, und
- daß die übertragenen Datenpakete auf der Empfängerseite in einem FIFO-Speicher zwischengespeichert und um einen vorgegebenen Zeitwert zeitlich verzögert aus dem FIFO-Speicher ausgegeben werden.

Fig. 1

**Beschreibung**

Die Erfindung betrifft ein Verfahren zur seriellen Übertragung von isochronen Daten mit fest definierten Zeitintervallen und mit geringen, je nach Dateninhalten variierbaren Toleranzgrenzen, insbesondere zur Übertragung von Video-Daten und von Audio-Daten in der Kabine eines Flugzeuges vorzugsweise zusammen mit für die Kabinenbesatzung und Passagiere relevanten Steuer- und Kontrollsignalen.

Deterministische Übertragungsverfahren für isochrone Daten, die in fest definierten Zeitintervallen bei sehr engen Toleranzgrenzen an einen Empfänger übertragen werden, sind bekannt. Die Toleranzgrenzen können je nach Dateninhalten variiert werden, bei Audio-Daten liegt die Toleranzgrenze beispielsweise bei wenigen Mikrosekunden. Bekannt sind weiterhin nicht-deterministische Datenübertragungsverfahren, bei denen nicht sichergestellt werden kann, daß Daten (z. B. isochrone Daten) zu fest definierten Zeitpunkten bei engen Toleranzgrenzen beim Empfänger ankommen.

Ein bekanntes Beispiel für ein nicht-deterministisches Datenübertragungsverfahren ist das Verfahren gemäß dem CAN-Standard (Controller Area Network Standard), welches zur Vernetzung von verschiedenen Komponenten wie z.B. Sensoren, Aktoren usw. bei reduziertem Kabelaufwand eingesetzt wird. CAN basiert auf einer seriellen Datenübertragung über verschiedene Medien wie beispielsweise einer 2-Draht-Kupferleitung. Hierbei können bis zu 32 Busteilnehmer am Datenverkehr teilnehmen. Die Daten werden in Paketen mit bis zu acht Daten-Bytes zusammengefaßt, wobei den Paketen entsprehhend der Wichtigkeit der Daten unterschiedliche Prioritäten zugewiesen werden. Jeder Knoten des CAN-Netzsystems kann zu jedem Zeitpunkt versuchen, einen Buszugriff zu bekommen. Es wird keine übergeordnete System-Instanz benötigt, die die Buszugriffe steuert (sogenanntes Multi-Master-Prinzip). Bei gleichzeitigem Zugriff mehrerer Knoten erhält der Knoten den Zugriff, der das Paket mit der höchsten Priorität senden will. Dabei gibt es keine Datenverluste.

Die standardisierten Brutto-Datenübertragungsraten über eine Kupferleitung betragen bis zu 1 Mbit/s bei bis zu 40 m Leitungslänge. Mehrere CAN-Bus-Segmente lassen sich durch sogenannte Repeater zusammenschalten. um somit größere übertragungsdistanzen realisieren zu können.

Ein Beispiel für die Übertragung isochroner Daten ist die Audio-Datenübertragung in einer Flugzeugkabine. Hierfür wurde bisher ein Verfahren eingesetzt, bei dem die Audio-Worte zu fest definierten Zeiten übertragen wurden, um Verzerrungen zu vermeiden. Bei diesem Verfahren wird ein Audio-Datenwort bei einer Abtastrate von z.B. 25 kHz pro Kanal exakt alle 40 µs übertragen. Zusammen mit den Audio-Daten ist die Übertragung der für die Kabinenbesatzung und Passagiere relevanten Steuer- und Kontrollsignale über einen Zwei-Draht-Datenbus bekannt. Wegen der oben beschriebenen Anforderungen an die Isochronität der Audio-Daten ist der Übertragungsrahmen allerdings nachteiligerweise starr mit fest definierten Übertragungszeitscheiben für die verschiedenen Dateninhalte.

Der Erfindung liegt daher die Aufgabe zugrunde, ein Verfahren zu schaffen, welches die Übertragung von isochronen Daten zu nicht fest definierten Zeitpunkten unter Beibehaltung des CAN-BUS-Standards ermöglicht.

Die Aufgabe wird erfindungsgemäß dadurch gelöst,

- daß ein nicht-deterministisches Datenübertragungsverfahren zur seriellen Übertragung der isochronen Datenströme verwendet wird,
- daß die isochronen Datenströme zu Datenpaketen mit unterschiedlichen Prioritäten entsprechend der Wichtigkeit der Datenströme zusammengefaßt werden,
- daß die Datenpakete zur reihenmäßigen restlegung mit zeitmarken versehen werden,
- daß die Datenpakete übertragen werden, und
- daß die übertragenen Datenpakete auf der Empfängerseite in einem FIFO-Speicher zwischengespeichert und um einen vorgegebenen Zeitwert zeitlich verzögert aus dem FIFO-Speicher ausgegeben werden.

Die Aufgabe wird erfindungsgemäß auch dadurch gelöst,

- daß ein nicht-deterministisches Datenübertragungsverfahren zur seriellen Übertragung der isochronen Datenströme verwendet wird,
- daß die isochronen Datenströme zu Datenpaketen mit unterschiedlichen Prioritäten entsprechend der Wichtigkeit ihrer Daten zusammengefaßt werden,
- daß die Datenpakete übertragen werden,
- daß die übertragenen Datenpakete in einem FIFO-Speicher auf der Empfängerseite zwischengespeichert werden, und
- daß nach Auffüllung des FIFO-Speichers auf einen vorgegebenen Datenwert die qespeicherten Datenpakete nach einer vorgegebenen Zeit in vorgegebenen konstanten Zeitintervallen verzögert ausgegeben werden.

Weiterbildungen der Erfindung sind in den Unteransprüchen 3 bis 9 beschrieben.

So ist z.B. eine Weiterbildung der erfindungsgemäßen Verfahren darin zu sehen, daß ein für ein nicht-deterministisches Datenübertragungsverfahren ausgelegter CAN-Datenbus verwendet wird. Auch können die Datenpakete zur Datenübertragung komprimiert und die komprimierten Datenpakete zur Auswertung der isochronen Daten nach der Datenübertragung dekomprimiert werden.

Bei einer Übertragung von isochronen Daten zusammen mit beispielsweise für die Kabinenbesatzung und Passagiere in einem Flugzeug relevanten Steuer- und Kontrollsignalen bestehen erfinderische Ausgestaltungen darin,

- daß in Phasen der Nichtübertragung der Steuer- und Kontrollsignale die Datenpakete über den CAN-Datenbus übertragen werden, und
- daß zur Übertragung von Datenpaketen über den CAN-Datenbus die Übertragung von Steuer- und Kontrollsignalen unterbrochen wird und die Unterbrechung nach erfolgter Übertragung der Datenpakete aufgehoben wird.

Ein wesentlicher Vorteil der Erfindung besteht darin, daß eine Übertragung von in zeitkonstanten Abständen zu übertragenden isochronen Daten z. B. über einen CAN-Datenbus erfolgt, der für solch eine isochrone Übertragung prinzipiell nicht ausgelegt ist, da bereits Schwankungen von weinigen μs nicht akzeptable Auswirkungen haben. Vorteilhafterweise ist der Einsatz von Komponenten eines industriell weit verbreiteten CAN-Standards möglich, wodurch ein ausgereiftes Übertragungssytem mit ausgereiften Komponenten verfügbar ist und wodurch sich Kostenvorteile aufgrund hoher Stückzahlen ergeben. Von Vorteil ist auch, daß die zeitliche Abfolge von Datenpaketen nicht definiert sein muß, d.h. ein Hinzufügen oder ein Herausnehmen von zu übertragenden Datenpaketen kann vorgenommen werden, ohne die Protokoll-SW zu ändern.

In der Zeichnung sind prinzielle Skizzen zur Erläuterung der erfindungsgemäßen Verfahren dargestellt, und zwar zeigt:

Fig. 1      ein Diagramm für ein u.a. Zeitmarken verwendendes Verfahren,

Fig. 2      ein Diagramm für ein Verfahren, welches ohne Zeitmarken durchführbar ist, und

Fig. 3      den Aufbau einer Testanlage.

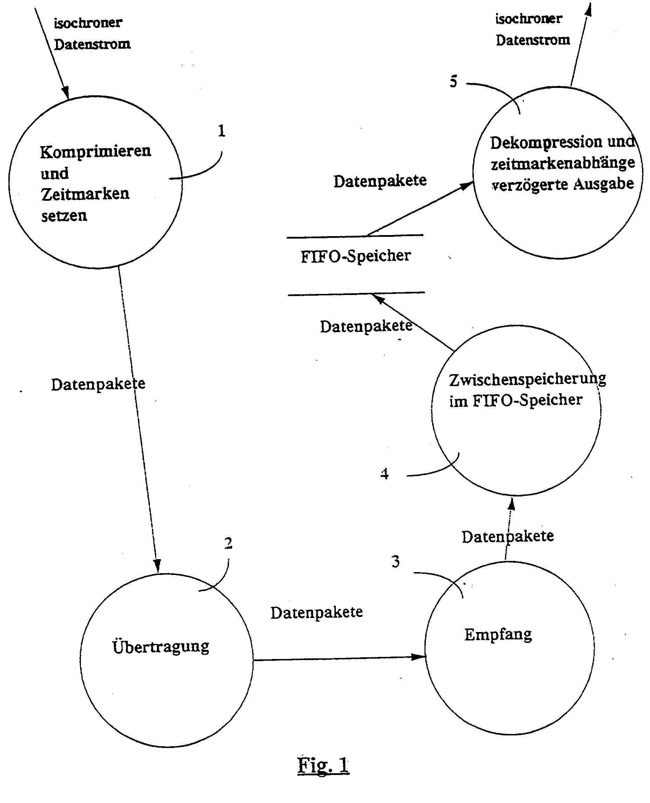

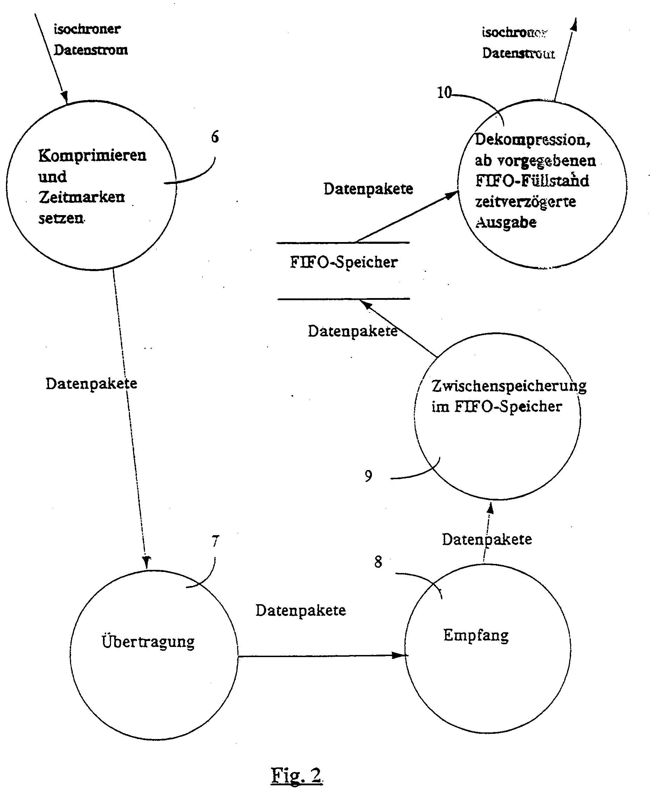

Die einzelnen Schritte der beiden erfindungsgemäßen Verfahren zur seriellen Übertragung von isochronen Daten mittels eines CAN-Datenbus sind in den Figuren 1 und 2 durch kreisförmige Symbole dargestellt. So umfaßt das Symbol 1 in Fig. 1 eine Zusammenfassung von isochronen Datenströmen zu Datenpaketen mit unterschiedlichen Prioritäten entsprechend der Wichtigkeit der Datenströme, wobei die Datenpakete komprimiert und zur reihenmäßigen Festlegung mit Zeitmarken versehen werden. Bei der Übertragung von Audiodaten erfolgt die Datenkomprimierung, um möglichst viele Audio-Kanäle übertragen zu können. Beispielsweise sind bis zu 8 Sprachkanäle mit je 64 kbit/s übertragbar. Wie die Symbole 2 und 3 zeigen wird eine Übertragung der komprimierten Datenpakete zu einem Empfänger über den nicht gezeichneten CAN-Datenbus durchgeführt. Anschließend werden die übertragenen Datenpakete in einem FIFO-Speicher zwischengespeichert, mittels der Zeitmarken um einen vorgegebenen Zeitwert von z. B. 10 ms zeitlich verzögert aus dem FIFO-Speicher ausgegeben sowie zur Auswertung der isochronen Daten dekomprimiert, was durch die Symbole 4 und 5 dargestellt ist. Die Verzögerungszeit ist durch die Größe des verwendeten FIFO-Speichers begrenzt.

In Fig. 2 stellt das Symbol 6 die Zusammenfassung von isochronen Datenströme zu Datenpaketen mit unterschiedlichen Prioritäten entsprechend der Wichtigkeit der Datenströme sowie deren Komprimierung dar. Hingegen betreffen die Symbole 7 und 8 die Übertragung und den Empfang der komprimierten Datenpakete, die auf der Empfängerseite in einem FIFO-Speicher zwischengespeichert werden (vgl. Symbol 9). Nach Auffüllung des FIFO-Speichers auf einen vorgegebenen Datenwert werden die gespeicherten Datenpakete in vorgegebenen konstanten Zeitintervallen zeitverzögert ausgegeben und zur Auswertung der isochronen Daten dekomprimiert, was durch das Symbol 10 dargestellt ist.

Für beide erläuterten Verfahren ergibt sich die verzögerte Ausgabezeit "t" für die Datenpakete zu:

t = Kompressionszeit + Verzögerungszeit + Dekompressionszeit , wobei die Verzögerungszeit von x [ms] erforderlich ist, um Verzögerungen bzw. Schwankungen in der Übertragung von x [ms] kompensieren zu können. Beispielsweise ergibt sich für die Übertragung von unkomprimierten Daten bei einer Verzögerung von 2 ms die erforderliche Mindestgröße eines FIFO-Speichers zur Zwischenspeicherung dieser Daten wie folgt: 12,5 (6) kHz Bandbreite: 25 (12,5) kHz sample rate x 12 bit -> 600 (300) bit/2ms --> 75 (38) Byte ---> 150 (75) Byte FIFO

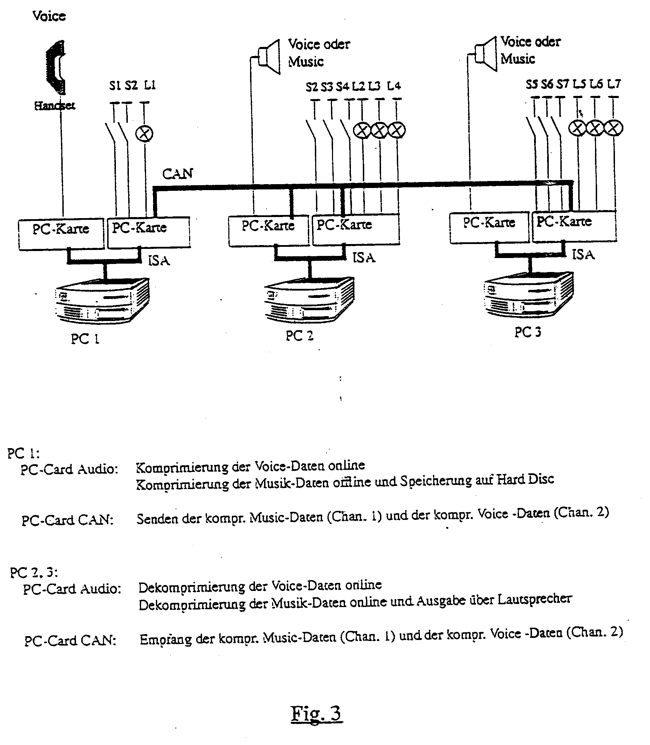

Die in Fig. 3 dargestellte Testanlage zur seriellen übertragung von Audiodaten nach den oben beschriebenen Verfahren weist drei PC's auf, deren Karten über einen CAN-Datenbus miteinander in Verbindung stehen. Bedienelemente und einzelne durchgeführte Verfahrensschritte sind Fig. 3 zu entnehmen.

**Patentansprüche**

1. Verfahren zur Übertragung von isochronen Daten mit fest definierten Zeitintervallen und mit geringen, je nach Dateninhalten variierbaren Toleranzgrenzen, insbesondere zur Übertragung von Video-Daten und von Audio-Daten in der Kabine eines Flugzeuges vorzugsweise zusammen mit für die Kabinenbesatzung und Passagiere relevanten Steuer- und Kontrollsignalen, dadurch gekennzeichnet,

   - daß ein nicht-deterministisches Datenübertragungsverfahren zur seriellen Übertragung der isochronen Datenströme verwendet wird,
   - daß die isochronen Datenströme zu Datenpaketen mit unterschiedlichen Prioritäten entsprechend der Wichtigkeit der Datenströme zusammengefaßt werden,
   - daß die Datenpakete zur reihenmäßigen Festlegung mit Zeitmarken versehen werden,
   - daß die Datenpakete übertragen werden, und
   - daß die übertragenen Datenpakete auf der Empfängerseite in einem FIFO-Speicher zwischengespeichert und um einen vorgegebenen Zeitwert zeitlich verzögert aus dem FIFO-Speicher ausgegeben werden.

2. Verfahren zur Übertragung von isochronen Daten mit fest definierten Zeitintervallen und mit geringen, je nach Dateninhalten variierbaren Toleranzgrenzen, insbesondere zur Übertragung von Video-Daten und von Audio-Daten in der Kabine eines Flugzeuges vorzugsweise zusammen mit für die Kabinenbesatzung und Passagiere relevanten Steuer- und Kontrollsignalen, dadurch gekennzeichnet,

   - daß ein nicht-deterministisches Datenübertragungsverfahren zur seriellen Übertragung der isochronen Datenströme verwendet wird,
   - daß die isochronen Datenströme zu Datenpaketen mit unterschiedlichen Prioritäten entsprechend der Wichtigkeit der Datenströme zusammengefaßt werden,
   - daß die Datenpakete übertragen werden,
   - daß die übertragenen Datenpakete in einem FIFO-Speicher auf der Empfängerseite zwischengespeichert werden, und
   - daß nach Auffüllung des FIFO-Speichers auf einen vorgegebenen Datenwert die gespeicherten Datenpakete nach einer vorgegebenen Zeit in vorgegebenen konstanten Zeitintervallen verzögert ausgegeben werden.

3. Verfahren nach Anspruch 1 oder 2, dadurch gekennzeichnet, daß ein für ein nicht-deterministisches Datenübertragungsverfahren ausgelegter CAN-Datenbus verwendet wird.

4. Verfahren nach Anspruch 1, 2 oder 3, dadurch gekennzeichnet, daß die Datenpakete zur Datenübertragung komprimiert werden, und daß die komprimierten Datenpakete zur Auswertung der isochronen Daten nach der Datenübertragung dekomprimiert werden.

5. Verfahren nach Anspruch 1, 2, 3 oder 4, dadurch gekennzeichnet, daß die Verzögerungszeit zur Ausgabe der Datenpakete aus dem FIFO-Speicher einen durch die Größe des verwendeten FIFO-Speichers begrenzten Wert aufweist.

6. Verfahren nach Anspruch 1, 2, 3, 4 oder 5, wobei eine Übertragung von isochronen Daten zusammen mit Steuer- und Kontrollsignalen erfolgt, dadurch gekennzeichnet, daß in Phasen der Nichtübertragung von Steuer- und Kontrollsignalen die Datenpakete über den CAN-Datenbus übertragen werden.

7. Verfahren nach Anspruch 6, dadurch gekennzeichnet, daß zur Übertragung von Datenpaketen über den CAN-Datenbus die Übertragung von Steuer- und Kontrollsignalen unterbrochen wird und die Unterbrechung nach erfolgter übertragung der Datenpakete aufgehoben wird.

8. Verfahren nach einem der Ansprüche 1 bis 7, gekennzeichnet durch die Verwendung eines Datenübertragungsverfahrens entsprechend dem CAN-Standard.

isochroner
Datenstrom

isochroner
Datenstrom

5

**Komprimieren
und
Zeitmarken
setzen**

1

**Dekompression und
zeitmarkenabhänge
verzögerte Ausgabe**

Datenpakete

FIFO-Speicher

Datenpakete

**Zwischenspeicherung
im FIFO-Speicher**

Datenpakete

4

Datenpakete

2

3

Datenpakete

**Übertragung**

**Empfang**

<u>Fig. 1</u>

isochroner
Datenstrom

Komprimieren
und
Zeitmarken
setzen.

6

isochroner
Datenstrom

10

Dekompression,
ab vorgegebenen
FIFO-Füllstand
zeitverzögerte
Ausgabe

Datenpakete

FIFO-Speicher

Datenpakete

Datenpakete

Zwischenspeicherung
im FIFO-Speicher

9

Datenpakete

Datenpakete

7

8

Übertragung

Datenpakete

Empfang

Fig. 2.

Voice

Voice oder
Music

Voice oder
Music

Handset

S1 S2 L1

S2 S3 S4 L2 L3 L4

S5 S6 S7 L5 L6 L7

CAN

PC-Karte  PC-Karte    PC-Karte  PC-Karte    PC-Karte  PC-Karte

ISA

ISA

ISA

PC 1

PC 2

PC 3

PC 1:
  PC-Card Audio:   Komprimierung der Voice-Daten online
                   Komprimierung der Musik-Daten offline und Speicherung auf Hard Disc

  PC-Card CAN:     Senden der kompr. Music-Daten (Chan. 1) und der kompr. Voice -Daten (Chan. 2)


PC 2, 3:
  PC-Card Audio:   Dekomprimierung der Voice-Daten online
                   Dekomprimierung der Musik-Daten online und Ausgabe über Lautsprecher

  PC-Card CAN:     Empfang der kompr. Music-Daten (Chan. 1) und der kompr. Voice -Daten (Chan. 2)


## Fig. 3

**Europäisches Patentamt**

**EUROPÄISCHER RECHERCHENBERICHT**

Nummer der Anmeldung

EP 99 10 1993

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | DECOTIGNIE J D ET AL: "PRODUCER-DISTRIBUTOR-CONSUMER MODEL ON CONTROLLER AREA NETWORK" PROCEEDINGS OF THE IFAC/IFIC WORKSHOP, REAL TIME PROGRAMMING, 6. November 1995, Seiten 35-42, XP002074139 * Seite 36, linke Spalte, Zeile 37 - Zeile 39 * * Seite 40, linke Spalte, Zeile 29 - Seite 41, linke Spalte, Zeile 1 * --- | 1-3,6,8 | H04L12/64 |
| A | EP 0 789 502 A (MARCONI GEC LTD) 13. August 1997 * Zusammenfassung * * Spalte 3, Zeile 15 - Zeile 29 * --- | 1,2,4 | |
| A | BLOKS R H J: "THE IEEE-1394 HIGH SPEED SERIAL BUS" PHILIPS JOURNAL OF RESEARCH, Bd. 50, Nr. 1/02, 1. Juli 1996, Seiten 209-216, XP000627671 * Seite 210, Zeile 35 - Seite 211, Zeile 4 * * Seite 212, Zeile 17 - Zeile 32 * * Seite 213, Zeile 25 - Zeile 36 * --- | 1,2,6 | RECHERCHIERTE SACHGEBIETE (Int.Cl.6) H04L |
| A | US 5 526 353 A (HENLEY ARTHUR ET AL) 11. Juni 1996 * Zusammenfassung * * Spalte 10, Zeile 12 - Zeile 18 * * Spalte 12, Zeile 6 - Zeile 9 * * Spalte 13, Zeile 36 - Zeile 67 * ----- | 1,2,4,5 | |

Der vorliegende Recherchenbericht wurde für alle Patentansprüche erstellt

| Recherchenort | Abschlußdatum der Recherche | Prüfer |
|---|---|---|
| BERLIN | 11. Juni 1999 | Masche, C |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 99 10 1993

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-06-1999

| Im Recherchenbericht angeführtes Patentdokument | Datum der Veröffentlichung | Mitglied(er) der Patentfamilie | Datum der Veröffentlichung |
|---|---|---|---|
| EP 0789502 A | 13-08-1997 | GB 2310114 A | 13-08-1997 |
| US 5526353 A | 11-06-1996 | KEINE | |

Für nähere Einzelheiten zu diesem Anhang : siehe Amtsblatt des Europäischen Patentamts, Nr.12/82

EPO FORM P0461